# EUROPEAN PATENT SPECIFICATION

(11) **EP 2 548 794 B1**
(45) Date of publication and mention of the grant of the patent: **05.11.2014**
(21) Application number: 10847683.9
(22) Date of filing: 23.03.2010
(51) Int. Cl.: B62M 3/08

(54) **QUICK DETACHABLE PEDAL WITH MANUAL TOOLS**
SCHNELL LÖSBARES PEDAL MIT MANUELLEM WERKZEUG
PÉDALE À DÉGAGEMENT RAPIDE POURVUE D'OUTILS À MAIN

(30) Priority: 17.03.2010 CN 201010125807
(43) Date of publication of application: 23.01.2013
(73) Proprietor: Lin, Wen-Hwa, Taichung Hsien (TW)
(72) Inventor: Lin, Wen-Hwa, Taichung Hsien (TW)
(74) Representative: Viering, Jentschura & Partner Patent- und Rechtsanwälte
(86) International application number: PCT/CN2010/071200
(87) International publication number: WO 2011/113214

(56) References cited:
- CN-A- 1 676 410
- CN-Y- 2 485 218
- CN-Y- 2 501 798
- CN-Y- 2 618 850
- DE-U1-202005 002 604
- TW-U- M 340 242
- US-A1- 2004 074 334

## Description

### Technical Field

The present invention relates to a quick-release pedal for a bicycle, and more particularly, to a tool-incorporating quick-release pedal having its main body containing various bicycle maintenance tools. The disclosed pedal can be easily detached from the bicycle crank, and then have one or more of the tools swiveled out for bicycle maintenance.

### Description of Related Art

Recently, more and more people become fond of cycling, for either leisure or commutes. In a bicycle, pedals are where a cyclist's feet are settled on and apply force to, making them a crucial component to cycling sport. Seeing this trend, the relevant manufacturers have developed quick-release pedals, allowing cyclists to easily replace pedals as needed. While these existing quick-release pedals are convenient in terms of quick replacement, they are still limited to the exclusive usage, namely being pedaled and driving bicycles.

On the other hand, there are many portable tool kits marketed in the forms of tool-containing bags or packs to be attached to bicycles through adhesion or binding. However, these tool kits tend to have the tools therein scattered during jolts or shakes happening on road, and the scattered tools may impact each other and damage the bags or packs. In addition, the conventional tool kits often lack for dedicated positioning or fixing designs, so they are likely to drop from bicycles due to unreliable fastening. Also, the existing tool kits are provided as a standing-alone member, making the same tend to be left aside either before the cyclist's moving off or after the cyclist's using the tools. As a result, it is frequent to see cyclists not thinking of his/her neglected tool kit until there is a need of repair. Besides, the conventional tool kits are not integrated with bicycles, so they can be easily neglected or missed, and become unavailable when they are in need.

In cyclist, especially for long-distance road cycling, it is preferable to have the bicycle well equipped with maintenance tools for contingent use, so that when the bicycle has conditions, the problems can be fixed immediately. In this regard, integrated tool provision attached to a pedal would be an effective solution to prevent tools from being left aside. Such integrated tool provision can make a pedal multifunctional and more helpful to cyclists, and it also eliminates the need of adhering or binning a tool pack to bicycles. In general, an integrated means for providing maintenance tools on a bicycle is useful to ensure the cyclist with a convenient and safe cycling journey.

As described above, the conventional tool kits are not made as a part of bicycles, so tools they provide are likely to be neglected or missed.

### Summary of Invention

Therefore, the objective of the present invention is to provide a tool-incorporating quick-release pedal that is constructed by integrating tools with a pedal body, so that a cyclist can, when cycling, pedal the pedal receiving tools therein, and, for repair, detach the pedal from the bicycle and swivel the tools out from the pedal to use, making the pedal advantageously multifunctional.

TW-M-340 242 discloses a pedal having the features of the preamble of claim 1.

To this end, the present invention discloses a tool-incorporating quick-release pedal, which comprises:
a main body having an axial shaft that has one end provided with a quick-release seat configured to be detachably combined with a bicycle crank, and is encircled by a frame that is connected to the axial shaft through at least one connector, wherein the connector has two ends thereof coupled to the axial shaft and the frame, respectively, and accommodating space is formed between the frame and the axial shaft such that the accommodating space presents at least one open plane; and
a plurality of tools each having one end pivotally connected to the connector and an opposite end movably received in the accommodating space,
wherein the quick-release seat allows the main body to be easily detached from the bicycle crank, and then one or more of the tools are allowed to be swiveled out from the accommodating space through the open plane for bicycle maintenance. The main body is thereby constructed to act as a not only a pedal but also a container for storing the tools.

Therein, the frame has two lateral plates that are parallel to and flank the axial shaft, and the two lateral plates have ends thereof distant from the quick-release seat connected by an outer cap.

Therein, the two lateral plates and the outer cap are provided with plural different tooling holes for being fittingly mounted around and screwing or unscrewing bolts of different dimensions.

Therein, a tire lever is attached to each of the two lateral plates, wherein the tire lever comprises a shank and a working end, in which the shank has an inner surface provided with a plurality of links and the lateral plates are provided with corresponding through holes, so that the links are movably held by the lateral plates when passing through the through holes and entering the accommodating space.

Therein, the links are jutting out of the accommodating space near the open plane, so that the tools are retained in the accommodating space by the links.

Therein, each of the shanks has an outer surface provided with a reflector.

Therein, each of the shanks is provided with at least one tooling hole for being fittingly mounted around and screwing or unscrewing bolts.

Therein, each of the lateral plates has a plurality of positioning bars forming a close plane facing the open plane across the accommodating space, so that the tools are retained in the accommodating space by the positioning bars.

Therein, each of the tools has a hook portion for connecting the connector and the connector has a round cross-sectional shape, so that the tool is allowed to pivot against the connector.

Therein, the tools comprise one or more of a chain detacher, a slotted-point screwdriver, a cross-point screwdriver, a torx-point screwdriver, a hex-head screwdriver and a hex-key wrench.

With the configuration as described above, the disclosed tool-incorporating quick-release pedal has the following benefits.

First, the quick-release seat allows the main body to be attached to or be detached from the bicycle crank easily, and the connector allows all the necessary tools for bicycle maintenance to be received in the accommodating space of the main body. Thus, the tools are also assembled to the bicycle crank together with the main body as a part of the pedal, and are ensured to be carried. This not only facilitates maintenance, but also eliminates the needs of adhering or binding an external tool pack to the bicycle.

Secondly, the two lateral plates and the outer cap are provided with plural different tooling holes for being fittingly mounted around and screwing or unscrewing bolts of different dimensions. This allows a cyclist to conveniently use the tooling holes at the two lateral plates or at the shank to work with bolts of different sizes.

Additionally, apart from the accommodating space for receiving tools, the main body has the frame to provide it with a structural support, so that the main body can bear a cyclist's full pedaling force.

The following preferred embodiments when read with the accompanying drawings are made to clearly exhibit the above-mentioned and other technical contents, features and effects of the present invention. However, the accompanying drawings are intended for reference and illustration, but not to limit the present invention and are not made to scale. Unless otherwise noted, like elements will be identified by identical numbers throughout all figures.

### Brief Description of Drawings

**Figure 1** is an exploded view of the present invention.
**Figure 2** is a perspective view of the present invention.
**Figure 3** is a cross-sectional view of the present invention.
**Figure 4** is an applied view of the present invention assembled to a bicycle crank.
**Figure 5** is another applied view of present invention.

### Detailed Description of Invention

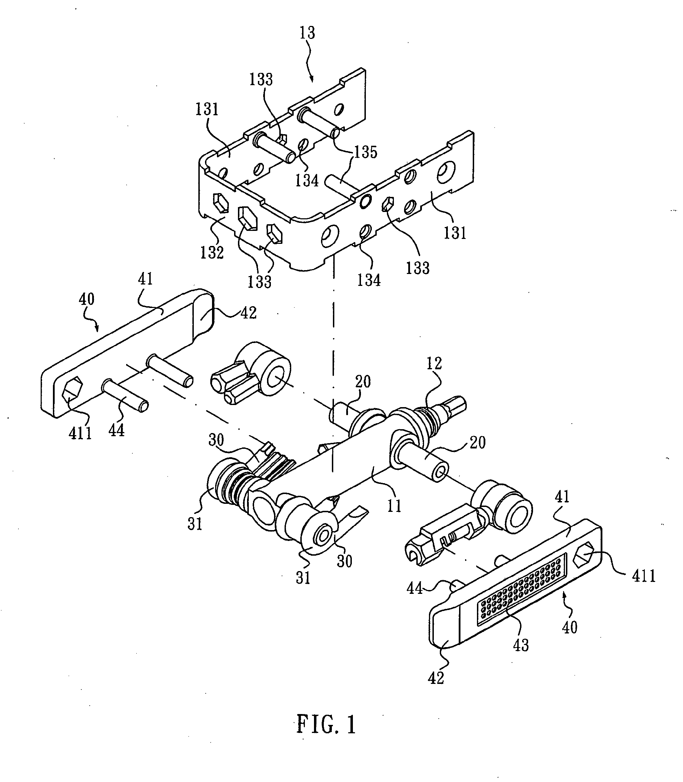

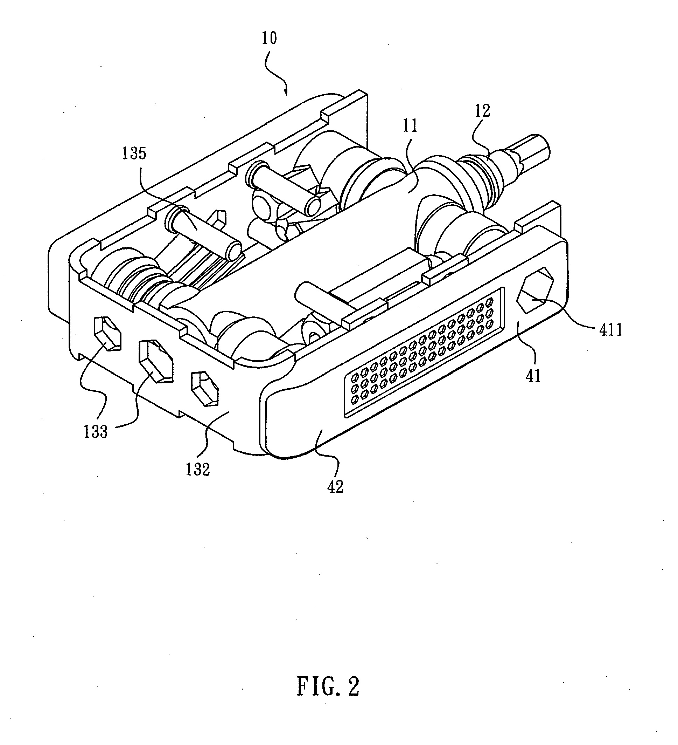

Referring to **Figure 1** through **Figure 3**, a tool-incorporating quick-release pedal is configured as follows.

A main body **10** has an axial shaft **11** that has one end provided with a quick-release seat **12** configured to be detachably combined with a bicycle crank **100**, and is encircled by a frame **13** has two lateral plates **131** that are parallel to and flank the axial shaft **11.** The two lateral plates **131** have ends thereof distant from the quick-release seat **12** connected by an outer cap **132.** The two lateral plates **131** and the outer cap **132** are provided with plural different tooling holes **133** for being fittingly mounted around and screwing or unscrewing nuts of different dimensions. The frame **13** is connected to the axial shaft **11** through at least one connector **20.** The connector **20** has a round cross-sectional shape and have two ends thereof connected to the axial shaft **11** and the lateral plates **131** of the frame **13,** respectively. An accommodating space **14** is defined between the frame 13 and the axial shaft 11 and has at least one open plane **141.**

A plurality of tools 30 each has one end pivotally connected to the connector **20** and an opposite end movably received in the accommodating space **14.**

With the quick-release seat **12,** the main body **10** can be easily detached from the bicycle crank **100,** and then one or more of the tools **30** can be swiveled out from the accommodating space **14** through the open plane **141** for bicycle maintenance. The main body **10** is thereby constructed to act as a not only a pedal but also a container for storing the tools **30.**

Additionally, a tire lever **40** is attached to each of the two lateral plates **131,** wherein the tire lever **40** comprises a shank **41** and a working end **42.** The shank **41** has an outer surface provided with a reflector **43** and the shank **41** is provided with at least one tooling hole **411** for being fittingly mounted around and screwing or unscrewing nuts. The shank **41** has its inner surface provided with a plurality of links **44,** while the lateral plates **131** are provided with corresponding through holes **134,** so that the links **44** are movably held by the lateral plates **131** when passing through the through holes **134** and entering the accommodating space **14**. The links **44** are jutting out of the accommodating space **14** near the open plane **141,** so that the tools **30** are retained in the accommodating space **14** by the links **44.** Besides, each of the lateral plates **131** has a plurality of positioning bars **135** forming a close plane **142** facing the open plane **141** across the accommodating space **14,** so that the tools **30** are retained in the accommodating space **14** by the positioning bars **135.**

Each of the tools **30** has a hook portion **31** for connecting the connector **20,** so that the tool **30** is allowed to pivot against the connector **20.** The tools **30** may include a chain detacher, a slotted-point screwdriver, a cross-point screwdriver, a trox-point screwdriver, a hex-head screwdriver and a hex-key wrench.

With the configuration detailed previously, the description is now continued with the operation of the disclosed pedal.

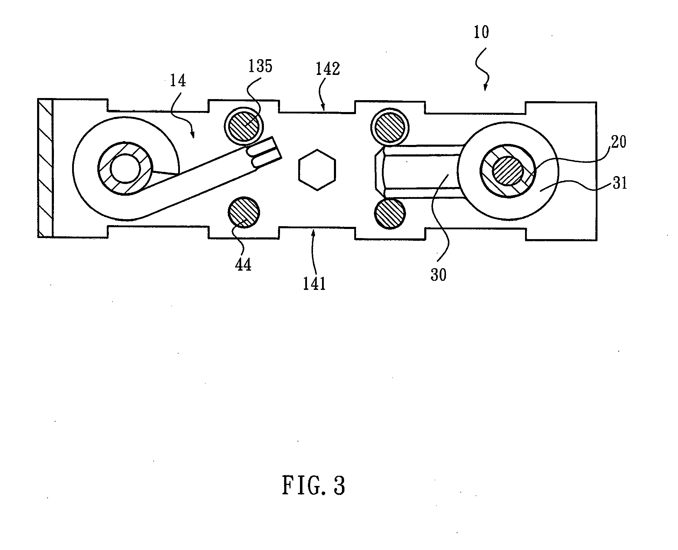

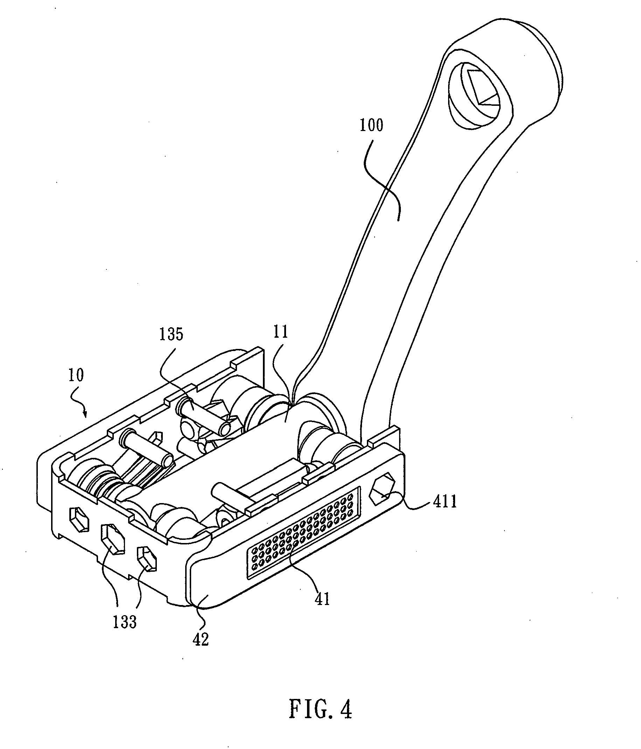

Referring to **Figure 4****,** the disclosed pedal is attached to a bicycle crank **100** through the quick-release seat **12**, so that the main body **10** is presented as a state allowing a cyclist to pedal thereon and drive the bicycle. For preventing the tools **30** from accidentally turning out from the accommodating space **14** during cycling to cause unevenness of the pedal surface and bring risk to the cyclist, the links **44** of the tire lever 40 are jutting out of the accommodating space **14** near the open plane **141,** so as to retain the tools **30** inside the accommodating space **14.** Also, the positioning bars **135** retain the tools **30** inside the accommodating space **14,** as shown in **Figure 3****.** Thereby the tools **30** can be secured in the accommodating space **14** when they are not in use. In this case, the tools **30** are carried by the main body **10** and attached to the bicycle crank **100** as integrated pedal parts.

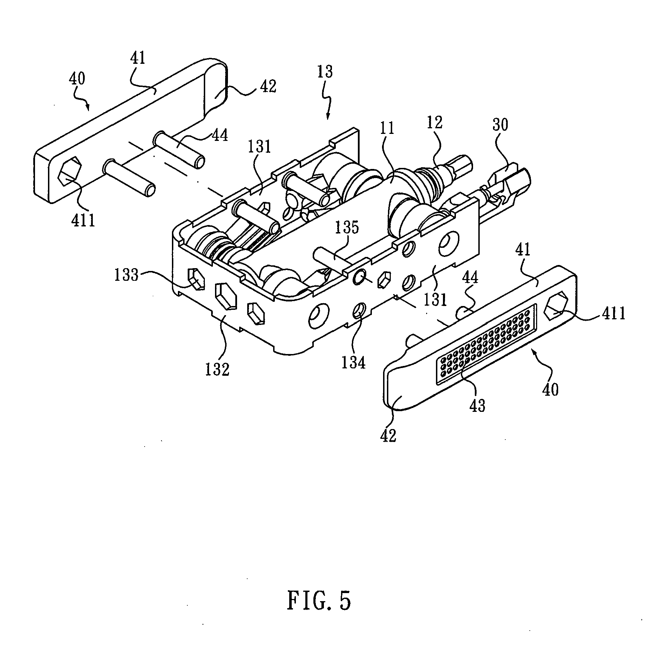

Referring to **Figure 5****,** in case of bicycle failure during cycling, where the tools **30** incorporated in the main body **10** are required for repair, the quick-release seat **12** associated with the main body **10** is first detached from the crank **100,** and then the tire levers **40** and the frame **13** are removed from the main body **10.** At this time, the cyclist may use the tooling holes **133, 411** on the frame **13** or on the tire lever **40** to mount around and operate bolts according to the sizes of the bolts, or the cyclist may use the tire lever **40** to facilitate tire repair or replacement. If the tools **30** connected to the connector **20** are required in repair, since the positioning bars **135** and the links **44** are now removed from the accommodating space **14,** the tools **30** are now free to be swiveled out from the accommodating space **14,** so the cyclist can easily use the required tools **30** for repair. As compared to the conventional tool kits, the way the present invention provides the tools **30** is more convenient in terms of storing and carrying tools.

Thereby, the main body **10** is normally a pedal body for a bicycle, and can be pedaled to drive the bicycle after attached to the bicycle crank **100** through the quick-release seat **12.** In the event where repair or replacement is needed during cycling, the main body **10** can be easily detached from the bicycle crank 100 by virtue of the quick-release seat **12,** so that the tools **30** incorporated in the main body **10** are ready to be used for maintenance. In the case of a conventional tool kit, the tools tend to be left aside by the cyclist after maintenance, and this in turn causes the predicament that no tool available when bicycle failure happens. This may be mainly attributed to that a tool pack attached to the bicycle frame is not a main component of the bicycle body, letting alone being core to drive the bicycle, and the bicycle can be ridden with or without the tool pack. However, the disclosed tool-incorporating quick-release pedal is itself a core component for driving a bicycle when combined with the crank **100** and this nature ensures it, as well as the tools **30,** to be carried with the bicycle. As the tools **30** are well received and positioned in the accommodating space **14,** the cyclist can have them with his/her cycling without additional troubles about storing and arranging tools.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A tool-incorporating quick-release pedal, comprising:
a main body (10) having an axial shaft(11) that has one end provided with a quick-release seat (12) configured to be detachably combined with a bicycle crank (100), and is encircled by a frame (13) that is connected to the axial shaft(11) through at least one connector (20), wherein the connector has two ends thereof coupled to the axial shaft (11) and the frame (13), respectively, and an accommodating space (14) is formed between the frame (13) and the axial shaft (12) such that the accommodating space (14) presents at least one open plane (141); and the frame (13) has two lateral plates (131) that are parallel to and flank the axial shaft (11), and the two lateral plates (131) have ends thereof distant from the quick-release seat (12) connected by an outer cap (132); and
a plurality of tools (30) each having one end pivotally connected to the connector (20) and an opposite end movably received in the accommodating space (14),
being **characterized in that** the two lateral plates (131) and the outer cap (132) are provided with plural different tooling holes (411) for being fittingly mounted around and screwing or unscrewing bolts of different dimensions,
wherein the quick-release seat (12) allows the main body (10) to be easily detached from the bicycle crank (100), and then one or more of the tools (30) are allowed to be swiveled out from the accommodating space (14) through the open plane (141) for bicycle maintenance.

2. The tool-incorporating quick-release pedal of Claim 1, being **characterized in that** a tire lever (40) is attached to each of the two lateral plates (131), wherein the tire lever (40) comprises a shank (41) and a working end (42), in which the shank (41) has an inner surface provided with a plurality of links (44) and the lateral plates (131) are provided with corresponding through holes (134), so that the links (44) are movably held by the lateral plates (131) when passing through the through holes (134) and entering the accommodating space (14).

3. The tool-incorporating quick-release pedal of Claim 2, being **characterized in that** the links (44) are jutting out of the accommodating space (14) near the open plane (141), so that the tools (30) are retained in the accommodating space (14) by the links (44).

4. The tool-incorporating quick-release pedal of Claim 2, being **characterized in that** each of the shanks (41) has an outer surface provided with a reflector (43).

5. The tool-incorporating quick-release pedal of Claim 2, being **characterized in that** each of the shanks (41) is provided with at least one tooling hole (411) for being fittingly mounted around and screwing or unscrewing bolts.

6. The tool-incorporating quick-release pedal of Claim 1, being **characterized in that** each of the lateral plates (131) has a plurality of positioning bars (135) forming a close plane (142) facing the open plane (141) across the accommodating space (14), so that the tools (30) are retained in the accommodating space (14) by the positioning bars (135).

7. The tool-incorporating quick-release pedal of Claim 1, being **characterized in that** each of the tools (30) has a hook portion (31) for connecting the connector (20) and the connector (20) has a round cross-sectional shape, so that the tool (30) is allowed to pivot against the connector (20).

8. The tool-incorporating quick-release pedal of Claim 1, being **characterized in that** the tools (30) comprise one or more of a chain detacher, a slotted-point screwdriver, a cross-point screwdriver, a torx-point screwdriver, a hex-head screwdriver and a hex-key wrench.

## Patentansprüche

1. Ein Schnelllösepedal mit einem integrierten Werkzeug, umfassend:
einen Hauptkörper (10) mit einer axialen Welle (11), die ein Ende hat, das mit einer schnelllösenden Aufnahme (12) versehen ist, die ausgebildet ist, um lösbar mit einer Fahrradtretkurbel (100) verbunden zu werden, und der umrandet ist von einem Rahmen (13), der mit der axialen Welle (11) durch zumindest ein Anschlussteil (20) verbunden ist, wobei das Anschlussteil zwei Enden aufweist, die jeweils mit der axialen Welle (11) und dem Rahmen (13) gekoppelt sind, und ein Aufnahmeraum (14) ist zwischen dem Rahmen (13) und der axialen Welle (12) ausgebildet, so dass der Aufnahmeraum (14) zumindest eine offene Ebene (141) bietet; und der Rahmen (13) hat zwei laterale Platten (131), die parallel zu der axialen Welle (11) angeordnet sind und diese flankieren, und die zwei lateralen Platten (131) haben Enden, die von der schnelllösenden Aufnahme (12) entfernt sind und durch eine äußere Kappe (132) miteinander verbunden sind; und
eine Mehrzahl von Werkzeugen (30), die jeweils ein Ende, das drehbar mit dem Anschlussteil (20) verbunden ist, und ein entgegengesetztes bewegliches Ende, das von dem Aufnahmeraum (14) aufgenommen ist, haben,
**dadurch gekennzeichnet, dass** die zwei lateralen Platten (131) und die äußere Kappe (132) mit mehreren unterschiedlichen Werkzeuglöchern (411) versehen sind, um passend um Bolzen von unterschiedlichen Ausmessungen montiert zu werden, diese anzuschrauben oder abzuschrauben,
wobei die schnelllösende Aufnahme (12) dem Hauptkörper (10) erlaubt, einfach von der Fahrradtretkurbel (100) abgetrennt zu werden, und dann können ein oder mehrere der Werkzeuge (30) aus dem Aufnahmeraum (14) durch die offene Ebene (141) herausgeschwenkt werden zur Fahrradinstandsetzung.

2. Das Schnelllösepedal mit einem integrierten Werkzeug nach Anspruch 1, **dadurch gekennzeichnet, dass** ein Montierhebel (40) an jede der zwei lateralen Platten (131) angebracht ist, wobei der Montierhebel (40) einen Schenkel (41) und ein Arbeitsende (42) umfasst, wobei der Schenkel (41) eine innere Oberfläche hat, die mit einer Mehrzahl von Bindegliedern (44) versehen ist und die lateralen Platten (131) sind mit entsprechenden Durchgangsbohrungen (134) versehen, so dass die Bindeglieder (44) beweglich von den lateralen Platten (131) gehalten werden, wenn sie die Durchgangsbohrungen (134) passieren und in den Aufnahmeraum (14) eintreten.

3. Das Schnelllösepedal mit einem integrierten Werkzeug nach Anspruch 2, **dadurch gekennzeichnet, dass** die Bindeglieder (44) aus dem Aufnahmeraum (14) neben der offenen Ebene (141) herausragen, so dass die Werkzeuge (30) in dem Aufnahmeraum (14) durch die Bindeglieder (44) aufbewahrt werden.

4. Das Schnelllösepedal mit einem integrierten Werkzeug nach Anspruch 2, **dadurch gekennzeichnet, dass** jeder der Schenkel (41) eine äußere Oberfläche hat, die mit einem Reflektor (43) versehen ist.

5. Das Schnelllösepedal mit einem integrierten Werkzeug nach Anspruch 2, **dadurch gekennzeichnet, dass** jeder der Schenkel (41) mit zumindest einem Werkzeugloch (411) versehen ist, um passend um Bolzen montiert zu werden, diese anzuschrauben oder abzuschrauben.

6. Das Schnelllösepedal mit einem integrierten Werkzeug nach Anspruch 1, **dadurch gekennzeichnet, dass** jede der lateralen Platten (131) eine Mehrzahl von Positionsstangen (135) aufweist, die eine geschlossene Ebene (142) ausbilden, die der offenen Ebene (141) auf der anderen Seite des Aufnahmeraums (14) gegenübersteht, so dass die Werkzeuge (30) in dem Aufhahmeraum (14) durch die Positionsstangen (135) aufbewahrt werden.

7. Das Schnelllösepedal mit einem integrierten Werkzeug nach Anspruch 1, **dadurch gekennzeichnet, dass** jedes der Werkzeuge (30) einen Hakenbereich (31) zum Verbinden des Anschlussteils (20) hat und das Anschlussteil (20) eine runde Querschnittsform hat, so dass es dem Werkzeug (30) ermöglicht ist, sich gegen das Anschlussteil (20) zu drehen.

8. Das Schnelllösepedal mit einem integrierten Werkzeug nach Anspruch 1, **dadurch gekennzeichnet, dass** die Werkzeuge (30) einen oder mehrere Kettenablöser, Langlochschraubendreher, Kreuzschlitzschraubendreher, Torx-Schraubendreher, Sechskantschraubendreher und Sechskantschlüssel aufweisen.

## Revendications

1. Pédale à dégagement rapide pourvue d'outils, comprenant :
un corps principal (10) ayant un arbre axial (11) qui a une extrémité comprenant un siège à dégagement rapide (12) configuré pour être combiné de façon détachable à une manivelle de bicyclette (100), et est encerclé par un cadre (13) qui est relié à l'arbre axial (11) au moyen d'au moins un connecteur (20), le connecteur ayant au moins deux extrémités de celui-ci couplées respectivement à l'arbre axial (11) et au cadre (13), et un espace de réception (14) est formé entre le cadre (13) et l'arbre axial (12) de telle sorte que l'espace de réception (14) présente au moins un plan ouvert (141) ; et le cadre (13) a deux plaques latérales (131) qui sont parallèles à et encadrent l'arbre axial (11), et les deux plaques latérales (131) ont des extrémités de celles-ci distantes du siège à dégagement rapide (12) reliées par un chapeau extérieur (132) ; et
une pluralité d'outils (30) ayant chacun une extrémité reliée de façon pivotante au connecteur (20) et une extrémité opposée reçue de façon mobile dans l'espace de réception (14),
**caractérisée par le fait que** les deux plaques latérales (131) et le chapeau extérieur (132) comportent plusieurs trous d'outillage différents (411) pour montage ajusté autour de et vissage ou dévissage de boulons de différentes dimensions,
le siège à dégagement rapide (12) permettant au corps principal (10) d'être détaché aisément de la manivelle de bicyclette (100), puis un ou plusieurs des outils (30) pouvant être pivotés hors de l'espace de réception (14) à travers le plan ouvert (141) pour un entretien de bicyclette.

2. Pédale à dégagement rapide pourvue d'outils selon la revendication 1, **caractérisée par le fait qu'**un levier démonte-pneu (40) est attaché à chacune des deux plaques latérales (131), le levier démonte-pneu (40) comprenant une tige (41) et une extrémité de travail (42), la tige (41) ayant une surface intérieure comportant une pluralité d'éléments de liaison (44) et les plaques latérales (131) comportent des trous traversants correspondants (134), de telle sorte que les éléments de liaison (44) sont maintenus de façon mobile par les plaques latérales (131) lorsqu'ils passent à travers les trous traversants (134) et entrent dans l'espace de réception (14).

3. Pédale à dégagement rapide pourvue d'outils selon la revendication 2, **caractérisée par le fait que** les éléments de liaison (44) font saillie hors de l'espace de réception (14) près du plan ouvert (141), de telle sorte que les outils (30) sont retenus dans l'espace de réception (14) par les éléments de liaison (44).

4. Pédale à dégagement rapide pourvue d'outils selon la revendication 2, **caractérisée par le fait que** chacune des tiges (41) a une surface extérieure comportant un catadioptre (43).

5. Pédale à dégagement rapide pourvue d'outils selon la revendication 2, **caractérisée par le fait que** chacune des tiges (41) comporte au moins un trou d'outillage (411) pour montage ajusté autour de et vissage ou dévissage de boulons.

6. Pédale à dégagement rapide pourvue d'outils selon la revendication 1, **caractérisée par le fait que** chacune des plaques latérales (131) a une pluralité de barreaux de positionnement (135) formant un plan fermé (142) faisant face au plan ouvert (141) en travers de l'espace de réception (14), de telle sorte que les outils (30) sont retenus dans l'espace de réception (14) par les barreaux de positionnement (135).

7. Pédale à dégagement rapide pourvue d'outils selon la revendication 1, **caractérisée par le fait que** chacun des outils (30) a une partie crochet (31) pour liaison au connecteur (20) et le connecteur (20) a une forme de section transversale ronde, de telle sorte que l'outil (30) peut pivoter autour du connecteur (20).

8. Pédale à dégagement rapide pourvue d'outils selon la revendication 1, **caractérisée par le fait que** les outils (30) comprennent un ou plusieurs d'un décrocheur de chaîne, d'un tournevis à pointe fendue, d'un tournevis cruciforme, d'un tournevis à pointe Torx, d'un tournevis à tête hexagonale et d'une clé hexagonale.
